# EUROPEAN PATENT APPLICATION

(11) **EP 4 451 152 A1**
(43) Date of publication of application: **23.10.2024**
(21) Application number: 23020192.3
(22) Date of filing: 20.04.2023
(51) Int. Cl.: G06F 21/57, H04L 9/40, G06F 21/55, G06N 20/00

(54) **A SYSTEM AND METHOD FOR ARTIFICIAL INTELLIGNET BASED TREAT MODELING**

(30) Priority: 17.04.2023 US 202318135688
(71) Applicant: . TEJVIR, 1083 HM Amsterdam (NL)
(72) Inventor: Tejvir, 1083 HM AMSTERDAM (NL)
(74) Representative: Butler, Kathryn Louise

(57) **Abstract**

The present invention discloses a system and method for providing automated threat modeling for cloud-based security powered by AI. Specifically, the disclosed invention utilizes advanced AI-based techniques and tools to automate the identification of potential security threats, provide traceability and compliance mapping, and generate cloud-specific security policies for improved efficiency and scalability. The disclosed invention leverages AI to analyze vast amounts of data to identify potential security risks and automatically generate appropriate security measures, significantly reducing the time and effort required to develop comprehensive security policies. The disclosed invention is designed to meet the needs of modern enterprises that require fast and reliable security solutions to protect their cloud-based infrastructure. By automating the threat modeling process, this invention enables businesses to scale their security operations and maintain compliance with industry regulations while ensuring that their systems are adequately protected against potential cyber threats.

## Description

### TECHNICAL FIELD OF THE INVENTION

The subject matter described herein relates to automated threat modeling solution for scalable and traceable security powered by Artificial Intelligence (Al) and, more particularly, related to advanced techniques and tools to automate threat identification, provide traceability, maps to compliance standards such as NIST 800-53 and generate cloud-specific security policies to improve efficiency and scalability.

### BACKGROUND OF THE INVENTION

In recent years, the importance of cybersecurity has become increasingly recognized by organizations, leading to a greater focus on proactively addressing security concerns during the design phase of applications. However, traditional threat modeling methods have struggled to keep pace with the rapid adoption of DevOps, Agile development methodologies, and public cloud services. This has created challenges for organizations in scaling threat modeling capabilities, including manual efforts and a shortage of cybersecurity skills to ensure the traceability of security requirements. Additionally, developers may lack knowledge in addressing threats specific to public cloud components due to the shared nature of these platforms.

Given the advancements in technology and the complexity of modern-day problems, the previously mentioned solution may not be sufficient to address all the challenges.

To address these challenges, a team has developed an automated threat modeling solution with a focus on the scalability and traceability of security requirements powered by Al. This solution offers key features to simplify the threat modelling process, including automated risk identification and analysis, integration with DevOps and Agile workflows, and specialized support for public cloud environments. By leveraging automation, this solution aims to improve the efficiency and effectiveness of threat modeling and support the secure design of applications.

Automated threat modeling uses software tools and techniques to identify potential security threats and vulnerabilities in software systems automatically.

Automated threat modeling can save time and reduce errors compared to manual threat modeling. It can also help ensure that all relevant threats are identified and assessed, which can be particularly important for complex systems.

### SUMMARY OF THE INVENTION

In one aspect, organizations face challenges in scaling threat modeling capabilities due to manual efforts, limited cybersecurity skill sets, and the need to ensure the traceability of security requirements. Developers often struggle to address threats specific to public cloud components, as the shared nature of these platforms adds complexity.

The subject matter described herein provides many technical advantages. For example, an automated threat modeling solution focusing on the scalability of threat modeling and traceability security requirements. Specifically, the proposed invention disclosed an automated threat modeling process that involves uploading a data flow or network diagram of an application landscape or creating one through a questionnaire. The tool then recognizes components in the diagram and matches them to a threat library. Users can edit, delete, and update components and generate a list of threats and countermeasures if a component is not in the threat library. A threat analysis generates a list of components with corresponding threats, countermeasures, and controls mapped to established standards. The generated list can be exported in multiple formats for tracking and traceability across the lifecycle.

The details of one or more variations of the subject matter described herein, the Automated Threat Modeling solution simplifies and automates threat modeling, enabling effortless scalability. With traceable outputs, compliance mapping to standards like NIST, and rapid generation of cloud-specific security policies, Automated streamlines threat modeling for maximum efficiency, freeing users time to focus on enforcing critical guardrails.

This summary is provided merely to summarize some example embodiments to provide a basic understanding of some aspects of the subject matter described herein. Accordingly, it will be appreciated that the above-described features are merely examples and should not be construed to narrow the scope or spirit of the subject matter described herein in any way. Other features, aspects, and advantages of the subject matter described herein will become apparent from the following detailed description and figures.

### BRIEF DESCRIPTION OF THE DRAWINGS

Embodiments will be discussed hereafter using reference to the included drawings, briefly described below, wherein like designations refer to like elements:
**FIG.** 1 illustrates the implementation of an automated threat modeling system.
**FIG.** 2 schematically visualizes the workflow of automated threat modeling process.
**FIG.** 3 visualized various implications and advantages of automated threat modeling system and method.

### DETAILED DESCRIPTION OF THE INVENTION

The following detailed description is intended to describe aspects of the invention in sufficient detail to enable those skilled in the art to practice the invention. Other embodiments can be utilized, and changes can be made without departing from the scope of the invention. Therefore, the following detailed description is not to be taken in a limiting sense. The scope of the invention is defined only by the appended claims, along with the full scope of equivalents to which such claims are entitled.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, embodiments of the invention can include a variety of combinations and/or integrations of the embodiments described herein.

The current subject matter is directed to an automated threat modeling solution for diverse environments, including public cloud setups, that incorporates AI, machine learning, and Open AI technologies. The solution automates the threat modeling process, identifies, and acknowledges components along with their associated threats, and generates traceable security requirements mapped to established compliance frameworks, such as NIST.

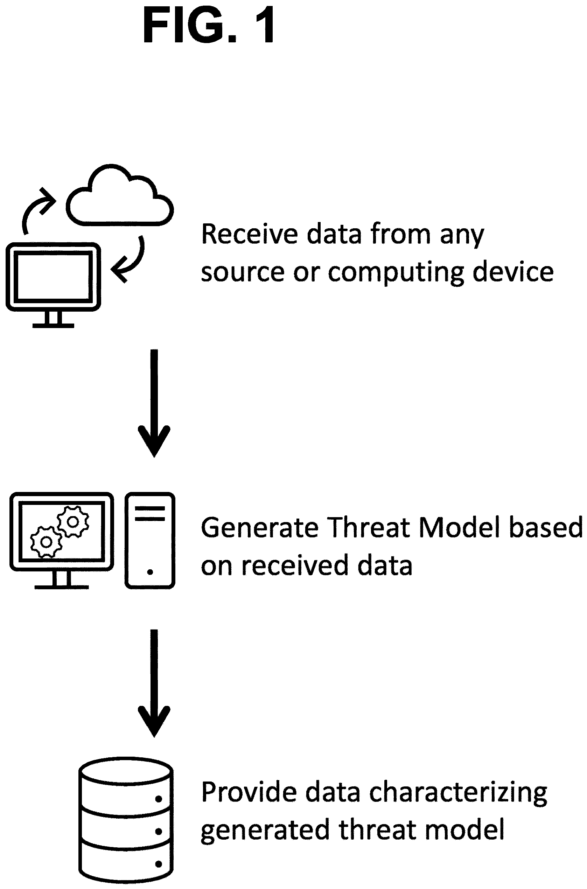

The threat modeling system and related methods discussed herein are implemented using computing devices and/or networks. Referring to FIG. 1, an implementation of a threat modeling system (threat model chaining system) (attack simulation system) (system) is shown. FIG. 1 only shows a representative example, and there are many other contemplated systems that could be used to implement the threat modeling processes. System or source (100) includes a computing device; it could be a laptop, a mobile phone or tablet, or any other type of computing device. The same goes for all other computing devices shown in the drawings.

The threat modeling system and methods include the modeling of threats utilizing software which users access and interact with through a variety of user interfaces, some examples of which will be described hereafter, but a brief description of the processes facilitated by the software will now be discussed.

Referring to **FIG. 1****,** a representative example of a threat modeling system includes generating a threat model based on received data. By non-limiting example, this could include modeling the possible threats to commuting to work safely or modeling the possible attacks on a computing environment (cybersecurity). Model is used to generate an original threat report which in implementations includes identified/characterizing threats, the status of identified threats (threat status), and the source(s) of identified threats, among other things.

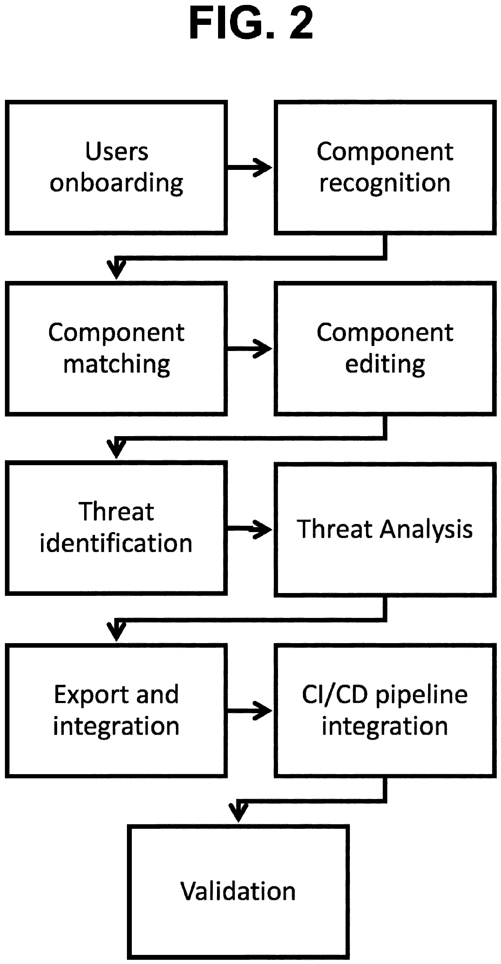

**FIG. 2** is a schematic workflow visualization of automated threat modeling solution for various environments, including public cloud environments, using AI, machine learning, and Open AI technologies. The solution automates the threat modeling process, identifies, and recognizes components and associated threats, and generates traceable security requirements mapped to established compliance frameworks such as NIST.

Further, as visualized in **FIG. 2****,** the detailed description of the automated threat modeling process involves the following steps: User onboarding: Users onboard the tool are prompted to upload an existing data flow or network diagram of their application landscape or create a diagram using automated means or a simple questionnaire. Component recognition: The tool uses the open-source library Tesseract OCR or Google Vision AI to recognize components in the uploaded diagram. Component matching: Users are presented with a visual representation of the graph, highlighting and matching components to the threat library. Component editing: Users can edit, delete, and update the list of components. Threat identification: If a user adds or updates a component not in the existing threat library, Open AI generates a list of threats and countermeasures. Threat analysis: Users can initiate a threat analysis, which generates a list of components with corresponding threats, countermeasures, and controls mapped to established standards such as NIST 800-53. For cloud-native components, countermeasures are mapped to relevant platform policies for AWS, Azure, or other cloud platforms, enabling users to mitigate specific threats. Export and integration: The generated list can be exported in multiple formats (CSV, XLSX, or JSON) and imported as user stories in project management tools like Jira or Azure DevOps for tracking and traceability across the lifecycle. CI/CD Pipeline Integration: The solution can be embedded within Continuous Integration and Continuous Delivery (CI/CD) pipelines, ensuring continuous security assessment and automated threat modeling throughout the application development lifecycle. Policy validation: After exporting and integrating the generated list, the solution validates if the policies are implemented for specific cloud environments, i.e., Azure, AWS, or other cloud platforms. An automated scan is performed to determine whether specific threats are mitigated according to the recommended policies.

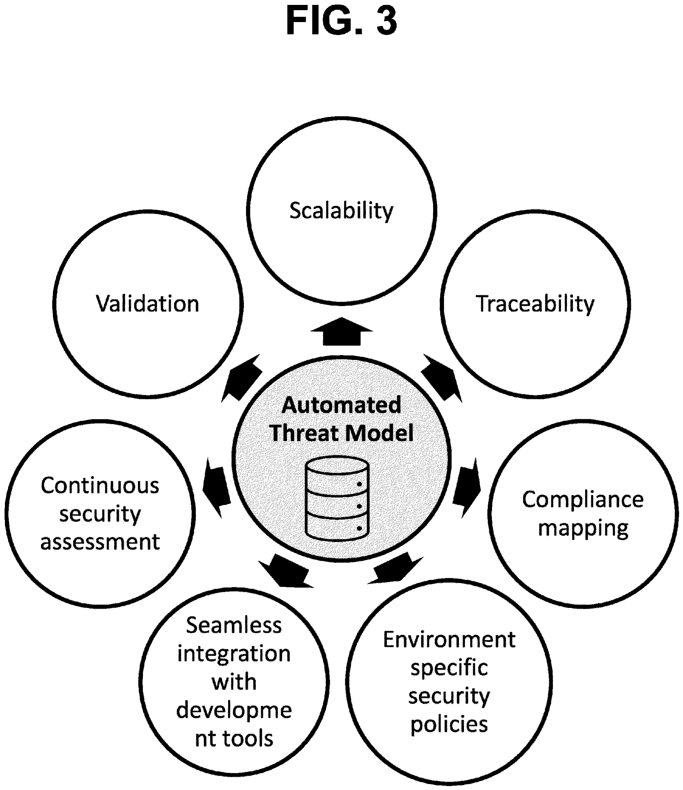

Referring now to **FIG. 3****,** The proposed invention provides several significant advantages, including but not limited to the following: Scalability: The automation of threat modeling allows organizations to scale their threat modeling capabilities more effectively. Traceability: Security requirements are traceable throughout the application lifecycle, ensuring proper implementation and monitoring. Compliance mapping: The solution maps security requirements to established compliance frameworks such as NIST, helping organizations meet regulatory standards. Environment-specific security policies: The solution generates and implements security policies for various environments, including public cloud platforms, addressing unique challenges these platforms pose. The solution maps countermeasures to relevant technical platform policies for cloud-native components, enabling users to mitigate specific threats easily. Seamless integration with development tools: The solution integrates with popular project management and development tools, streamlining the tracking and remediation of security issues. Continuous security assessment: By embedding the solution within CI/CD pipelines, organizations can maintain a proactive security posture by identifying and addressing threats before deployment and allowing developers to manage threats to the application security requirements aspect. Policy validation: The solution validates whether the recommended policies are implemented for specific cloud environments, ensuring that threats are effectively mitigated.

Furthermore, the proposed invention involves developing methods, software, and algorithms. However, experimental verification can be performed by testing the solution on real-world applications and cloud environments to validate the effectiveness of the automated threat modeling process.

This disclosure describes the invention as new and non-obvious because it addresses several key challenges in threat modeling that existing solutions have not fully resolved. Specifically, the invention automates the threat modeling process, leveraging AI and machine learning to improve efficiency and scalability, provides traceability of security requirements across the application lifecycle, ensuring proper monitoring and implementation, maps security requirements to established compliance frameworks, aiding organizations in meeting regulatory standards, generates environment-specific security policies, including for public cloud platforms, with countermeasures mapped to relevant technical platform policies, making it easier for users to mitigate specific threats, seamlessly integrates with popular development tools and CI/CD pipelines, streamlining security management throughout the application development process and, validates whether the recommended policies are implemented in specific cloud environments, ensuring that threats are effectively mitigated.

In a preferred embodiment of the present invention, a system for automated threat modeling of an existing computing environment using AI is disclosed. The system comprises of a processor; a memory coupled to the processor and storing instructions that, when executed by the processor, cause the system to: receive an input from a user, wherein the input comprises an existing data flow or network diagram of the existing computing environment or a request to create a diagram using automated means or a simple questionnaire; recognize components in the diagram using an AI service and match the components to cloud-native components in a threat library; present a visual representation of the diagram to the user, wherein the components are highlighted and matched to the cloud-native components in the threat library; enable the user to edit, delete, and update the list of components; generate a list of threats and countermeasures for each component added or updated by the user that is not present in the threat library using an AI service; assign responsibility for specific components or threats to other team members, as needed, wherein this assignment is reflected in a security admin dashboard as a shared component; initiate a threat analysis of the existing computing environment upon receiving a request from the user, wherein the threat analysis generates a list of components with corresponding threats, countermeasures, and controls mapped to established standards or policies; validate policy implementation for specific cloud environments by performing an automated scan to verify the proper mitigation of identified threats; update the status of threats to shared components and ensure they are mitigated either automatically or manually by the security admin; and export the list of components with corresponding threats, countermeasures, and controls in one or more formats and import the list as user stories in one or more project management tools for tracking and traceability across the lifecycle.

In another preferred embodiment of the present invention, a method for automated threat modeling of an existing computing environment using AI is disclosed, wherein the said method comprising steps of receiving an input from a user, wherein the input comprises an existing data flow or network diagram of the existing computing environment or a request to create a diagram using automated means or a simple questionnaire; recognizing components in the diagram using an AI service and matching the components to cloud-native components in a threat library; presenting a visual representation of the diagram to the user, wherein the components are highlighted and matched to the cloud-native components in the threat library; enabling the user to edit, delete, and update the list of components; generating a list of threats and countermeasures for each component added or updated by the user that is not present in the threat library using an AI service; assigning responsibility for specific components or threats to other team members, as needed, wherein this assignment is reflected in a security admin dashboard as a shared component; initiating a threat analysis of the existing computing environment upon receiving a request from the user, wherein the threat analysis generates a list of components with corresponding threats, countermeasures, and controls mapped to established standards or policies; validating policy implementation for specific cloud environments by performing an automated scan to verify the proper mitigation of identified threats; updating the status of threats to shared components and ensuring they are mitigated either automatically or manually by the security admin; and exporting the list of components with corresponding threats, countermeasures, and controls in one or more formats and importing the list as user stories in one or more project management tools for tracking and traceability across the lifecycle.

While there may be prior art in the field of threat modeling and automated security solutions, this invention combines these elements uniquely and innovatively, offering a comprehensive and scalable solution for organizations to address their security needs more effectively.

This disclosed automated threat modeling system and method further provided different advantages over the prior art, including but not limited to: Users onboard the tool are prompted to upload an existing data flow or network diagram of their application landscape or create a diagram using automated means or a simple questionnaire. The tool uses the open-source library Tesseract OCR or Google Vision AI to recognize components in the uploaded diagram. Users are presented with a visual representation of the graph, highlighting components and matching them to cloud-native components in our threat library. Users can edit, delete, and update the list of components. If a user adds or updates a component that is not present in the existing threat library, Open AI generates a list of threats and countermeasures. Users can initiate a threat analysis, which generates a list of components with corresponding threats, countermeasures, and controls mapped to established standards such as NIST 800-53. For cloud-native components, countermeasures are mapped to relevant platform policies for AWS or Azure, enabling users to mitigate specific threats. The generated list can be exported in multiple formats (CSV, XLSX, or JSON) and imported as user stories in project management tools like Jira or Azure DevOps for tracking and traceability across the lifecycle.

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular examples of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A system for automated threat modeling and policy validation of an existing computing environment using artificial intelligence, comprising:
a processor;
a memory coupled to the processor and storing instructions that, when executed by the processor, cause the system to:
receive an input from a user, wherein the input comprises an existing data flow or network diagram of the existing computing environment or a request to create a diagram using automated means or a simple questionnaire;
recognize components in the diagram using an artificial intelligence service and
match the components to cloud-native components in a threat library;
present a visual representation of the diagram to the user, wherein the components are highlighted and matched to the cloud-native components in the threat library;
enable the user to edit, delete, and update the list of components;
generate a list of threats and countermeasures for each component added or
updated by the user that is not present in the threat library using an artificial intelligence service;
assign responsibility for specific components or threats to other team members, as needed, wherein this assignment is reflected in a security admin dashboard as a shared component;
initiate a threat analysis of the existing computing environment upon receiving a request from the user, wherein the threat analysis generates a list of components with corresponding threats, countermeasures, and controls mapped to established standards or policies;
validate policy implementation for specific cloud environments by performing an automated scan to verify the proper mitigation of identified threats;
update the status of threats to shared components and ensure they are mitigated either automatically or manually by the security admin; and
export the list of components with corresponding threats, countermeasures, and controls in one or more formats and import the list as user stories in one or more project management tools for tracking and traceability across the lifecycle.

2. The system of claim 1, wherein the artificial intelligence service comprises one or more of natural language processing, computer vision, machine learning, deep learning, or neural networks.

3. The system of claim 1, wherein the threat library comprises a database of predefined components with associated threats, countermeasures, and controls based on industry standards or best practices.

4. The system of claim 1, wherein the existing computing environment comprises one or more of a public cloud platform, a private cloud platform, a hybrid cloud platform, a mobile platform, an Internet of Things platform, or a web platform.

5. The system of claim 1, wherein the system is configured to automatically update the threat library and the list of components with corresponding threats, countermeasures, and controls based on new or emerging threats or changes in the existing computing environment.

6. The system of claim 1, wherein the system is configured to integrate with one or more continuous integration and continuous delivery pipelines to perform continuous threat analysis and validation of the existing computing environment.

7. The system of claim 1, wherein the system is configured to generate and apply security policies for different environments based on the list of components with corresponding threats, countermeasures, and controls.

8. A method for automated threat modeling and policy validation of an existing computing environment using artificial intelligence, comprising:
a. receiving an input from a user, wherein the input comprises an existing data flow or network diagram of the existing computing environment or a request to create a diagram using automated means or a simple questionnaire;
b. recognizing components in the diagram using an artificial intelligence service and matching the components to cloud-native components in a threat library;
c. presenting a visual representation of the diagram to the user, wherein the components are highlighted and matched to the cloud-native components in the threat library;
d. enabling the user to edit, delete, and update the list of components;
e. generating a list of threats and countermeasures for each component added or updated by the user that is not present in the threat library using an artificial intelligence service;
f. assigning responsibility for specific components or threats to other team members, as needed, wherein this assignment is reflected in a security admin dashboard as a shared component;
g. initiating a threat analysis of the existing computing environment upon receiving a request from the user, wherein the threat analysis generates a list of components with corresponding threats, countermeasures, and controls mapped to established standards or policies;
h. validating policy implementation for specific cloud environments by performing an automated scan to verify the proper mitigation of identified threats;
i. updating the status of threats to shared components and ensuring they are mitigated either automatically or manually by the security admin; and
j. exporting the list of components with corresponding threats, countermeasures, and controls in one or more formats and importing the list as user stories in one or more project management tools for tracking and traceability across the lifecycle.

9. The method of claim 8, wherein the artificial intelligence service comprises one or more of natural language processing, computer vision, machine learning, deep learning, or neural networks.

10. The method of claim 8, wherein the threat library comprises a database of predefined components with associated threats, countermeasures, and controls based on industry standards or best practices.

11. The method of claim 8, wherein the existing computing environment comprises one or more of a public cloud platform, a private cloud platform, a hybrid cloud platform, a mobile platform, an Internet of Things platform, or a web platform.

12. The method of claim 8, further comprising automatically updating the threat library and the list of components with corresponding threats, countermeasures, and controls based on new or emerging threats or changes in the existing computing environment.

13. The method of claim 8, further comprising integrating with one or more continuous integration and continuous delivery pipelines to perform continuous threat analysis and validation of the existing computing environment.

14. The method of claim 8, further comprising generating and applying security policies for different environments based on the list of components with corresponding threats, countermeasures, and controls.
